(19) Europäisches Patentamt
European Patent Office
Office européen des brevets

(11) **EP 2 101 457 A1**

(12) **EUROPEAN PATENT APPLICATION**

(43) Date of publication:
**16.09.2009 Bulletin 2009/38**

(51) Int Cl.:
*H04L 27/156* (2006.01)    *H04L 27/22* (2006.01)
*H03D 3/00* (2006.01)    *H03M 7/16* (2006.01)

(21) Application number: **08102480.4**

(22) Date of filing: **11.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Seiko Epson Corporation**
**Shinjuku-ku**
**Tokyo 163-0811 (JP)**

(72) Inventors:
• **Lopez Martin, Martin**
**31006 Pamplona (ES)**
• **Gonzalez Carvajal, Ramón**
**41092 Sevilla (ES)**

• **Gil Gali, Ignacio**
**08190 Sant Cugat del Valles (Barcelona) (ES)**
• **Cairo Molins, Josep Ignasi**
**08190 Sant Cugat del Vallés (Barcelona) (ES)**
• **Aguado, Jesús**
**31006 Pamplona (ES)**
• **Acosta, Lucía**
**41092 Sevilla (ES)**
• **Ramirez Angulo, Jaime**
**41092 Sevilla (ES)**

(74) Representative: **Carpintero Lopez, Francisco et al**
**Herrero & Asociados, S.L.**
**Alcalá 35**
**28014 Madrid (ES)**

(54) **Demodulator with post-processing circuit for BER improvement**

(57)    Demodulator (1) for detecting digitally phase or frequency modulated signals comprising an in-phase component (i(t)) and a quadrature component (q(t)), said demodulator comprising: a linear combiner (3) for generating a plurality of 2N linear combinations of said in-phase component and said quadrature component; a plurality of amplitude limiters (40-1, 40-2, 40-3, 40-4, 40-5, 40-6, 40-7, 40-8) at the output of each of said linear combinations for providing a digital code (C0 C1 C2 C3 C4 C5 C6 C7) which represents a phase quantization sector of said linear combinations; a stage (50, 50a, 50b) for providing a decoded symbol (Data0 Data1 Data2 Data3) having $M=\log_2(4N)$ bits, for comparing (53a, 53b) said decoded symbol (Data0 Data1 Data2 Data3) with a delayed symbol (Data0' Data1' Data2' Data3') and for providing a symbol (out0 out1 out2 out3) resulting from said comparison; a flip-flop (9) placed at the output of said stage (50, 50a, 50b) for selecting a most significant bit (out3) of said provided symbol (out0 out1 out2 out3) resulting from said comparison; the demodulator (1) being characterised in that it further comprises: a post-processing stage (8) located between said stage (50, 50a, 50b) and said flip-flop (9), said post-processing stage (8) being designed for compensating for errors at the output (out-FF) of said flip-flop (9).

FIG. 10

**Description**

FIELD OF THE INVENTION

The present invention relates to demodulators for wireless receivers, and more precisely, to post-processing circuits for such demodulators.

STATE OF THE ART

When designing wireless receivers, the main limitations are imposed by: minimal power consumption, high integration density and minimal number of external components.

Most of the available choices for the architecture of a receiver can be grouped into two main categories: heterodyne receivers and homodyne (also called direct conversion or Zero-IF) receivers. Heterodyne receivers (including super-heterodyne ones) have a fixed, relatively high intermediate frequency (IF) or two different IF sections. A variant suited to highly integrated receivers is the Low-IF architecture.

Although conventional super-heterodyne receivers achieve high sensitivity, they are not a good solution in terms of power consumption. Furthermore, they require highly selective filters for image rejection and channel selection, which cannot be implemented on chip. Hence, typically external SAW resonators are used.

Concerning Low-IF, although it keeps the signal spectrum out of baseband, thus overcoming DC offsets and flicker noise, which are two important signal degradations typical at baseband frequencies, it involves some severe disadvantages: need for image rejection, high power consumption and sensitivity to I and Q gain/phase mismatch.

Finally, Zero-IF architectures allow at the same time achieving high integration density and low power consumption. Zero-IF receivers are based on the direct conversion of the RF signal to baseband. They feature important advantages, such as not requiring image rejection, because there are not image frequencies since the signal is directly converted to baseband (i.e. there is not intermediate frequency) and the channel filters are simple low-pass filters operating at lower frequencies than band-pass filters, required in band-pass channel filtering.

Thus, zero-IF receivers are the most promising choice in terms of cost, integration density and power consumption. However, since the signal is at base-band, it suffers from the already mentioned degradations (DC offset and Flicker noise). The simplest way to get rid of DC offset is to use a simple RC high-pass filter after the mixing-stage. This has typically been done for modulations with negligible DC components (like FSK signals with high modulation index) used in paging receivers. However, other types of modulation, such as GFSK, have significant spectral content near DC. As a consequence, high-pass filtering would remove useful signal components, thus increasing the SNR required for a certain BER. These degradations need to be properly addressed.

The choice of the demodulator is one of the most important setups, since its performance has a tremendous impact on the architecture of the receiver. The demodulator determines the minimum SNR required at its input for achieving the target BER, so it directly influences the noise figure (NF) and gain requirements of the receiver. If may also determine the complexity of the gain control strategy, the need for multibit analog-to-digital converters (ADC), the tolerance of AC coupling in the baseband and, in general, the extent to which non-idealities can be tolerated in the receiver (e.g. maximum I/Q mismatch errors). A proper choice of the demodulator can lead to a much simpler receiver and, thus, to significant savings in power consumption.

There are several choices for detection of digital phase or digital frequency modulated signals for both Low-IF and Zero-IF architectures: all-analog, all-digital and mixed analog-digital ones. All-analog implementations require in general a large amount of power, in the range of several mW, and are thus discarded due to its high power consumption. All-digital detectors are compact, efficient and insensitive to mismatch, and thus typically used in most integrated wireless transceivers. However, they usually require multibit analog-to-digital converters (ADCs) operating at relatively high speed, which feature large power consumption. Therefore, mixed analog-to-digital signal solutions with simple analog and digital circuits are a suitable option.

In order to avoid the already mentioned ADCs, amplitude limiters can be used alternatively. They can be employed when the modulation type does not imply time-varying amplitude, such as modulations having a constant envelope, like GFSK, MSK or BPSK. Amplitude limiters are capable of removing any undesired amplitude modulation due to the channel and receiver non-idealities. Amplitude limiters also greatly relax the gain control in the receiver, since for a wide input dynamic range the gain needs not be tuned, and a simple, discrete gain control can be used outside this range. In this case, such gain control needs not to enforce a certain signal level at the detector input, it just needs to make sure that the receiver does not saturate and fulfils the linearity and noise specifications for any received input level. Besides, multi-stage amplitude limiters simplify the design of RSSI (Received Signal Strength Indication) circuits. However, these limiters lead to odd order distortion, which is reflected in the time domain by signal clipping and in the frequency domain by scaled replicas of the original spectrum at frequencies 2k+1, with k integer. Such distortion needs to be removed if the detection is sensitive to it (i.e. if it is based on detecting the undistorted i(t) and q(t) signals). This is the case, e.g., in conventional cross-differentiate multiply detectors or in limiter-discriminator detectors. Such distortion can be removed in Low-IF receivers by filtering, since the replicas of the IF spectrum that appear at odd multiples of the intermediate frequency FIF are out of band and can be rejected by a band-pass filter. The main disadvantage is the additional power consumption of such filter. In Zero-IF receivers, however, this cannot be done, since distortion is no longer out of the desired band and cannot be removed by filtering. Hence, in order to use amplitude limiters in Zero-IF receivers the detector must be insensitive to the nonlinear distortion of the limiters, i.e., it must be based on detection of zero-crossings of the incoming signal.

The design of such devices is as follows:

First, a demodulator is selected. The basic operation of this detection method is described as follows:

A frequency-modulated (FM) signal at the input of a receiver can be expressed as follows:

$$s(t) = \sqrt{2S} \cos\left(\omega_{RF} t + \phi(t)\right) \tag{1}$$

where S is the mean signal power, $W_{RF} = 2\pi f_{RF}$ the radian frequency of the transmitter oscillator, and $\Phi(t)$ is the instantaneous phase deviation. In an unmodulated carrier $\Phi(t)$ is constant. When an FM modulation is applied, $\Phi(t)$ is equal to:

$$\phi(t) = 2\pi f_d \int_{-\infty}^{t} m(t) dt \tag{2}$$

where fd is the frequency sensitivity of the FM modulator (in Hz/V assuming m(t) in Volts) and m(t) is the modulating signal. In a binary FSK modulation m(t) can be expressed as:

$$m(t) = \sum_{n=-\infty}^{\infty} d_n g(t - nT) \tag{3}$$

where the data sequence is $d_{-2} d_{-1}$ do $d_1 d_2$ with $d_n \in (-1,1)$, $T=1/R_b$ is the bit duration and g(t) is the pulse shaping function. If the maximum value of |m(t)| is 1, then the maximum frequency deviation is $f_d$ and the modulation index is defined as $h=2 f_d T = 2 f_d /R_b$. The shift in $\phi(t)$ due to bit $d_k$ is:

$$\Delta\phi_k = \phi(kT) - \phi(kT - T) = 2\pi f_d \int_{kT}^{kT+T} d_k g(t - kT) dt \tag{4}$$

In a CPFSK modulation where g(t) is a rectangular pulse (i.e. no pulse shaping) the maximum phase transition is

$$\Delta\phi_k = \phi(kT) - \phi(kT - T) = 2\pi f_d T d_k = \pi h d_k = \begin{cases} \pi h & if \quad d_k = 1 \\ -\pi h & if \quad d_k = -1 \end{cases} \tag{5}$$

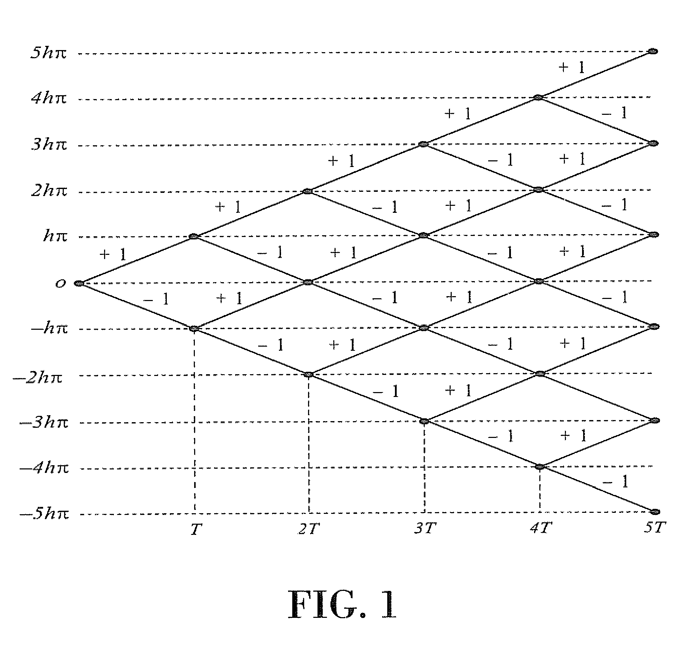

All the possible combinations for the evolution of $\phi(t)$ are shown in figure 1. In a CPFSK modulation with h=0.5 and g(t) a rectangular pulse (i.e. a MSK modulation) therefore the maximum frequency deviation is $f_d=1/(4T)$ and thus the maximum phase transition due to bit $d_k$ is $\pm\pi/2$, i.e., a positive phase shift of $\pi/2$ is produced by $d_k=1$ and a negative shift $-\pi/2$ for $d_k=-1$. Note also that in this case, since g(t) is constant this phase increase is produced linearly with time during T, as seen in figure 1.

If, for example, the modulation employed is GFSK with h=0.5, g(t) is a Gaussian pulse shape which smoothes phase variations and thus sharpens the signal spectrum, at the expense of intersymbol interference (ISI). The impulse response of the filter is

$$h(t) = \frac{1}{\sqrt{2\pi}\delta T} e^{\frac{-t^2}{2\delta^2 T^2}} \qquad (6)$$

with

$$\delta = \frac{\sqrt{\ln 2}}{2\pi BT} \qquad (7)$$

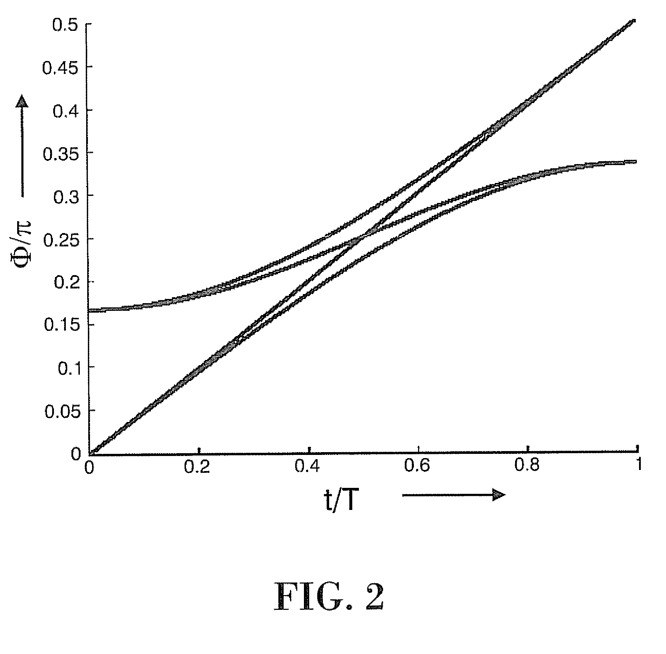

The BT product parameter represents bandwidth of the spectrum of g(t) multiplied by T. This nonnegative scalar reflects the tradeoff between bandwidth reduction and increase of intersymbol interference. In this case from (4), the phase shift during the symbol duration is not necessarily $\pi/2$. It can be lower, and it depends not only on the current bit but also on adjacent bits. Figure 2 shows the four possible phase paths in the GMSK phase trajectory. It can be observed that the phase shift can be approximately bounded by $\pi/6<|\Delta\phi_k|<\pi/2$.

Non-coherent multiplication of the received signal s(t) with the orthogonal local oscillator signals $2\cdot\cos(w_{LO}t-\varphi)$ and $2\cdot\sin(W_{LO}t-\varphi)$ in the I and Q branches of the receiver yields low pass quadrature signals:

$$i(t) = \sqrt{2S}\cos(\Delta\omega t + \phi(t) - \varphi)$$

$$q(t) = -\sqrt{2S}\sin(\Delta\omega t + \phi(t) - \varphi) \qquad (8)$$

The high frequency components at $W_{RE}+W_{LO}$ at the output of the quadrature mixer are rejected by the subsequent channel filter. The radian frequency offset $\Delta w =W_{RE}-W_{LO}$ may represent the IF frequency in a Low-IF receiver or the frequency error in a Zero-IF receiver. Constant $\varphi$ reflects the phase incoherence between s(t) and the local oscillator. Conventionally, signals i(t) and q(t) are digitized by multibit ADCs and then detection is done digitally. However, the resolution and speed requirements of these ADCs lead to significant power consumption, as previously mentioned. Instead of quantizing the amplitude of the in-phase i(t) and quadrature q(t) signals and then digitally computing the quantized phase, the phase of the input signal can itself be quantized.

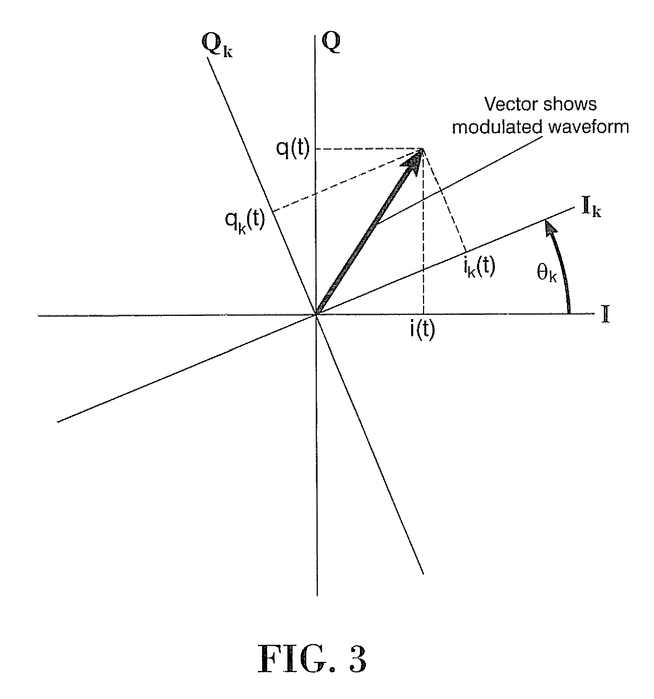

To understand the way phase can be quantized, first consider the vector representation of the angular modulation in the IQ-plane, shown in figure 3. Let's assume for the moment that $\Delta w=0$. The projection of this vector in the horizontal and vertical axes correspond to the in-phase i(t) and quadrature q(t) components, and its instantaneous angle with the horizontal axis is $\phi(t)-\varphi$. In analog modulations, $\phi(t)$ should be recovered. Fortunately, in digital modulations the exact value of $\phi(t)$ is not necessary and only the direction of the phase shift is required for decoding the transmitted symbol. A positive shift represents a 1 and a negative shift a 0. Thus, quantizing the phase in enough intervals (sectors in the complex IQ plane), detection can be done efficiently.

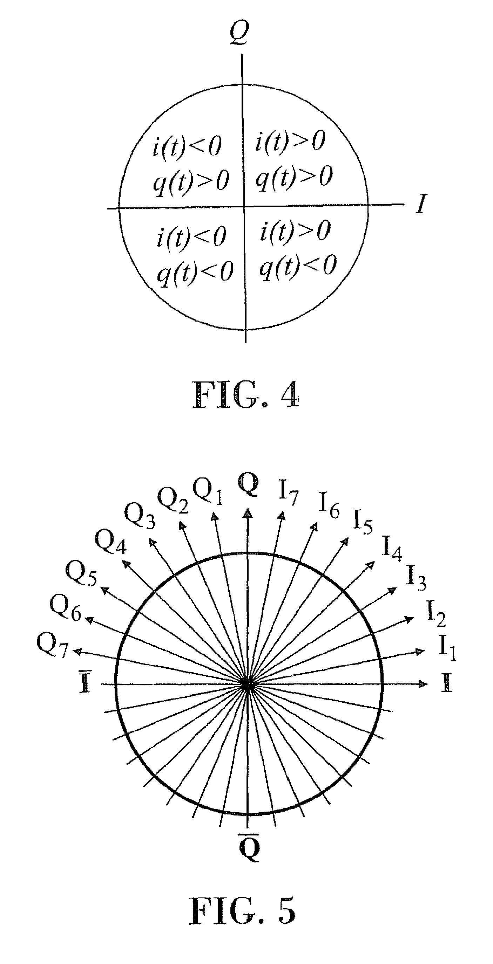

If we want to divide the phase plane in 4 sectors corresponding to the 4 quadrants, as shown in figure 4, just by sensing the polarity of i(t) and q(t) it can be determined in which quadrant the vector lies. Transition from adjacent quadrants takes place at the zero crossings of either i(t) or q(t). Thus i(t) or q(t) could withstand strong distortion provided the position of the zero crossings is not modified. Stated differently, amplitude hard-limiters can be employed.

This quantization is able to detect modulations where phase shifts in a bit duration T are always higher than $\pi/2$, by detecting transitions along quadrants of the modulation vector. Transitions from quadrant to quadrant are detected when either i(t) or q(t) change sign, i.e., at the zero crossings of either i(t) or q(t). For instance, transition from the first to the second quadrant happens at the zero crossing of i(t) when q(t) is positive. This positive phase shift is interpreted as the transmission of a bit 1. However, phase shifts below $\pi/2$ during T could not be enough to move the modulation vector outside a quadrant and hence could not be detected. This is unfortunately the case in GMSK, as shown in figure 2 and hence a finer quantization of the instantaneous phase (i.e., more sectors in the IQ plane) is required. A finer quantization improves the BER for a given SNR, but also leads to a more complex implementation of the demodulator. Hence a tradeoff is required.

Figure 5 shows, for instance, a division of the instantaneous phase in 32 sectors. This corresponds to a quantization of the phase in 32 levels.

Each sector is delimited by two axes. As shown in figure 2, each axis $I_k$ (k=0, 1, ..., N-1) is forming an angle with the horizontal axis of $\theta_k=\pi/(2N)$ with N=8 in this example. Note that $I_0$ is the I axis. Hence the projection of the modulation vector on axis $I_k$ is a linear combination of i(t) and q(t) given by:

$$i_k(t)=i(t)\cdot\cos\theta_k + q(t)\cdot\sin\theta_k \qquad (9)$$

The corresponding $Q_K$ axis is orthogonal to this $I_K$ axis ($Q_0$ is the Q axis) and therefore projection of the modulation vector on axis $Q_K$ is:

$$q_k(t)= -i(t)\cdot\sin\theta_k + q(t)\cdot\cos\theta_k \qquad (10)$$

Thus, for instance, detection of the transition of the modulation vector from the adjacent sectors separated by $I_3$ in the first quadrant is sensed at the zero crossing of $q_3(t)$ when $i_3(t)$ is positive, and depending on the change of sign of $q_3(t)$ the phase shift is clockwise or counterclockwise.

US5469112 discloses a communication device with zero-crossing demodulator, wherein the direction of the phase rotation of the signal vector is detected as it crosses the in-phase (I) and quadrature (Q) axes of the IQ complex plane by a bi-directional counter. The final count of the counter is used by a decision device to establish the content of the received information. However, the power consumption of the counter can become too high. Hence, for high data rate communications, the power consumption is very high. Furthermore, phase detection is done in only 4 quadrants, which involves a high rate of errors.

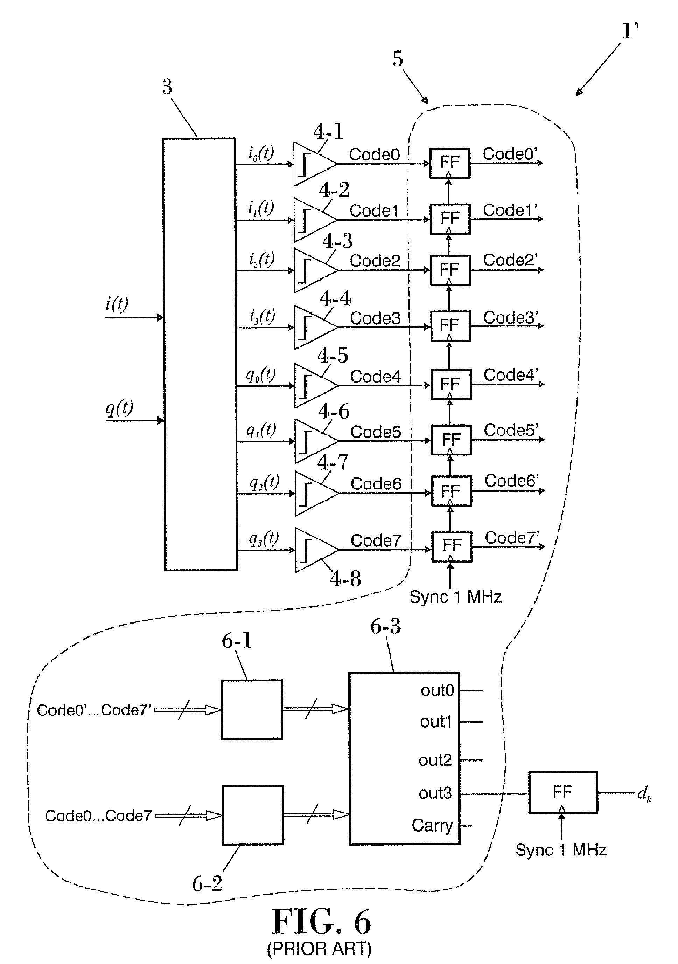

Low-complexity detectors for a zero-IF Bluetooth receiver based on a phase-domain analog-to-digital converter are disclosed by Sohrab Samadian et al, in "Demodulators for a Zero-IF Bluetooth Receiver", IEEE Journal of Solid-State Circuits, Vol. 38, N° 8, August 2003. It discloses a Bluetooth receiver with a stage of Zero-IF-down conversion which provides an in-phase (I) signal and a quadrature (Q) one after the reception at the antenna. These signals enter a linear combiner, where linear combinations of the I and Q waveforms with trigonometric weights project the received waveform along eight segment axes. Afterwards, 16 limiting amplifiers are implemented, followed by 16 respective flip-flops which delay each of the outputs of the linear combiners. Finally, a thermometer to binary decoder decodes a 16-bit thermometer code into 4-bits binary one. A demodulator 1' of this type is illustrated in figure 6:

First, a linear combining stage 3 generates the signals $i_k(t)$ and $q_k(t)$ (k=0, 1, ..., N-1) given by equations (9) and (10). In this particular example, N=4. Since just knowing the sign of such signals is enough to track the phase shifts in the quantized phase plane of figure 5, amplitude hard-limiters 4-1 4-2 4-3 4-4 4-5 4-6 4-7 4-8 are applied (whose output detects the sign of the input). The output of these amplitude hard-limiters 4-1 4-2 4-3 4-4 4-5 4-6 4-7 4-8 is represented in figure 6 as Code0 Code1 Code2 Code3 Code4 Code5 Code6 Code7. This output is demodulated and decoded by a stage 5 comprising an array of 2N flip-Flops (FF). To understand the scheme of figure 6, note that the output of the hard-limiters 4-1 4-2 4-3 4-4 4-5 4-6 4-7 4-8 can be considered as a thermometric code that encodes the sector in figure 5 where the phase lies at a given instant. If this code is stored in an array of FFs and wait for T seconds, the input of the FFs will represent the sector where the phase lies after the reception of bit $d_k$, whereas the output of the FFs will code the sector where the phase was just before the reception of bit $d_k$. Thus, comparing such codes, the direction of the phase shift produced by bit $d_k$ can be obtained, and hence bit $d_k$ can be decoded. To do so, the thermometric code is converted to binary by two decoders 6-1 6-2, and the result is subtracted 6-3. The most significant bit MSB of the resulting digital word corresponds to $d_k$. If it is 1, it corresponds to a counter-clockwise phase shift, whereas if it is 0, it corresponds to a clockwise phase shift. The signal modulated at the transmitter side corresponds to this sequence of bits dk.

However, the FFs must be clocked from a signal synchronized with the data in order to sense the phase of the incoming signals at the proper instants. Hence, a data synchronization circuitry must be considered when evaluating the complexity of this demodulator. Usually the number N is chosen as a power of 2, to simplify the digital logic. As mentioned before, a larger N increases proportionally the complexity of the demodulator but leads to a more accurate quantization of the instantaneous phase.

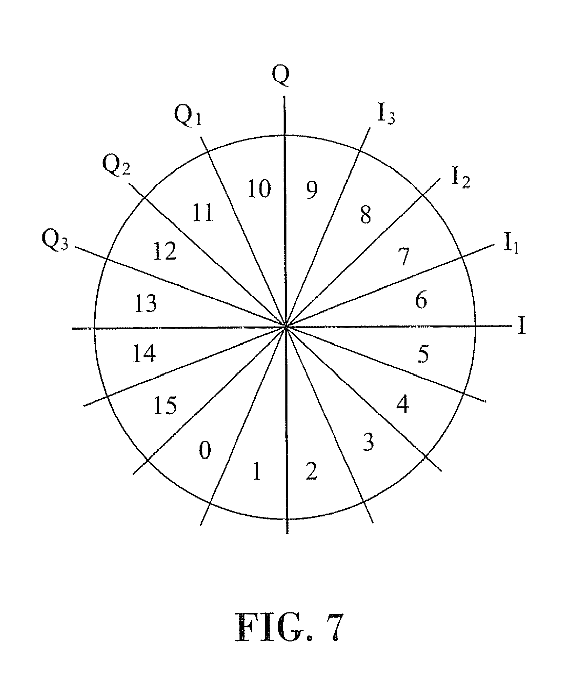

Choosing N=4, 8 axes (2N) are employed that divide the IQ plane in 16 (4N) sectors. This is illustrated in figure 7.

However, this implementation presents some drawbacks: This demodulator has been simulated for different SNR values. Analyzing the errors in the demodulated signals, it has been found that most of these errors are produced for data sequences of the type "101" or "010". These sequences lead to very small phase shifts when the middle bit is being detected, and when corrupted by noise these phase shifts are sometimes not enough for moving the phase out of a sector.

SUMMARY OF THE INVENTION

It is a primary aim of the present invention to provide a demodulator for detecting digital phase or digital frequency modulated signals, wherein those signals comprise an in-phase component and a quadrature component. The demodulator comprises: a linear combiner for generating a plurality of 2N linear combinations of said in-phase component and said quadrature component; a plurality of 2N amplitude limiters, each of them being placed at the output of each of said 2N linear combinations, for providing a digital code associated to the respective linear combination at the output of which they are placed, wherein that digital code represents a phase quantization sector of said linear combination; a stage for providing a decoded symbol having $M=\log_2(4N)$ bits, for comparing that decoded symbol with a delayed symbol corresponding to that M-bit symbol previously provided and for providing a symbol resulting from said comparison; a flip-flop placed at the output of that stage for selecting a most significant bit of that provided symbol resulting from the comparison, thus detecting the data signal. The demodulator is characterised in that it further comprises: a post-processing stage located between that stage and that flip-flop, that post-processing stage being designed for compensating for errors at the output of the flip-flop.

Preferably, the post-processing stage comprises a NOR gate and an OR gate. Preferably, the NOR gate comprises M inputs, M-1 of which correspond to the M-1 less significant output bits of the symbol resulting from the comparison, the M-th input of the NOR gate corresponding to the output of the flip-flop, and the OR gate comprises two inputs, one of them being the most significant output bit of the symbol and the second one being the output of the NOR gate, and wherein the output of the OR gate is the input of the flip-flop. Alternatively, the NOR gate comprises M+1 inputs, M of which correspond to the M output bits of the symbol resulting from the comparison, the M+1-th input of the NOR gate corresponding to the output of the flip-flop.

In a particular embodiment, the already mentioned stage for providing a decoded symbol comprises: decoding means for providing a decoded symbol having M bits, each of those M bits being outputted in parallel; a bank of M flip-flops, each of them being placed at the output of each of the M outputted bits for delaying that M-bit symbol previously outputted; comparison means for comparing that M-bit decoded symbol to that delayed M-bit decoded symbol.

In an alternative embodiment, the already mentioned stage for providing a decoded symbol comprises: a bank of 2N flip-flops, each of them being placed at the output of each of the 2N outputted bits of the digital code, for delaying said bits; a first decoding means for providing a decoded symbol having $M=\log_2(4N)$ bits from the digital code; a second decoding means for providing a decoded symbol having M bits from the delayed digital code; comparison means for comparing the M-bit decoded symbol to the delayed M-bit decoded symbol.

In both embodiments, the comparison means can be an adder. Alternatively, and preferably, the comparison means is a subtractor.

The decoding means preferably comprises a thermometer-to-binary decoder.

The frequency-modulated signal is preferably a GFSK signal.

Preferably, the demodulator further comprises a synchronization stage.

The invention also refers to a zero-IF receiver comprising a demodulator as the one described. The zero-IF receiver preferably comprises a zero-IF down conversion stage configured for converting a received signal into an in-phase component and a quadrature component. Preferably, it is a wireless receiver.

The advantages of the proposed invention will become apparent in the description that follows.

BRIEF DESCRIPTION OF THE DRAWINGS

To complete the description and in order to provide for a better understanding of the invention, a set of drawings is provided. Said drawings form an integral part of the description and illustrate a preferred embodiment of the invention, which should not be interpreted as restricting the scope of the invention, but just as an example of how the invention can be embodied. The drawings comprise the following figures:

Figure 1 represents the phase trajectory for binary CPFSK.

Figure 2 shows four possible basic paths in the GMSK phase trajectory.

Figure 3 illustrates a vector representation of a phase modulated signal.

Figure 4 represents the polarity of i(t) and q(t) in each quadrant of the IQ-plane.

Figure 5 shows the quantization of the phase in the complex plane.

Figure 6 shows a demodulator according to the prior art.

Figure 7 illustrates a phase quantization with 8 axes (N=4).

Figure 8 shows a simplified diagram of a wireless receiver according to an embodiment of the invention.

Figure 9 shows a demodulator according to the present invention.

Figure 10 shows a demodulator according to a preferred embodiment of the present invention.

Figure 11 shows a demodulator according to an alternative embodiment of the present invention.

Figure 12a shows the post-processing stage for N=4 according to the present invention.

Figure 12b shows the post-processing stage according to the present invention.

Figure 13 shows the instantaneous phase of a GMSK modulation of an input datastream.

Figure 14 shows the instantaneous phase (radians) versus time (seconds) at the input and output of a base-band pre-processing section, with negligible noise (Eb/No-120dB), without HPF and with LPF of 10MHz.

Figure 15 shows the instantaneous phase (radians) versus time (seconds) at the input and output of a base-band pre-processing section, with negligible noise (Eb/No=120dB), without HPF and with LPF of 650 KHz.

Figure 16 shows the instantaneous phase (radians) versus time (seconds) at the input and output of a base-band pre-processing section, with negligible noise (Eb/No=120dB), with HPF having cutoff frequency of 10 KHz and with LPF of 10 MHz.

Figure 17 shows the instantaneous phase (radians) versus time (seconds) at the input and output of a base-band pre-processing section, with negligible noise (Eb/No=120dB), with HPF having cutoff frequency of 10 KHz and with LPF of 650 KHz.

Figure 18 shows the performance of different simulated demodulators: 4-axes detector (ZCx4), 8-axes detector (ZCx8), Cross-Differentiate multiply (CDM) and 8-axes detector with the post-processing of figures 10 and 11 (ZCx8+DFP).

Figure 19 shows the performance of different simulated demodulators with delay compensation: 4-axes detector (ZCx4), 8-axes detector (ZCx8), Cross-Differentiate multiply (CDM) and 8-axes detector with the post-processing of figures 10 and 11(ZCx8+DFP).

DESCRIPTION OF PREFERRED EMBODIMENTS OF THE INVENTION

The implementation of the present invention can be carried out as follows:

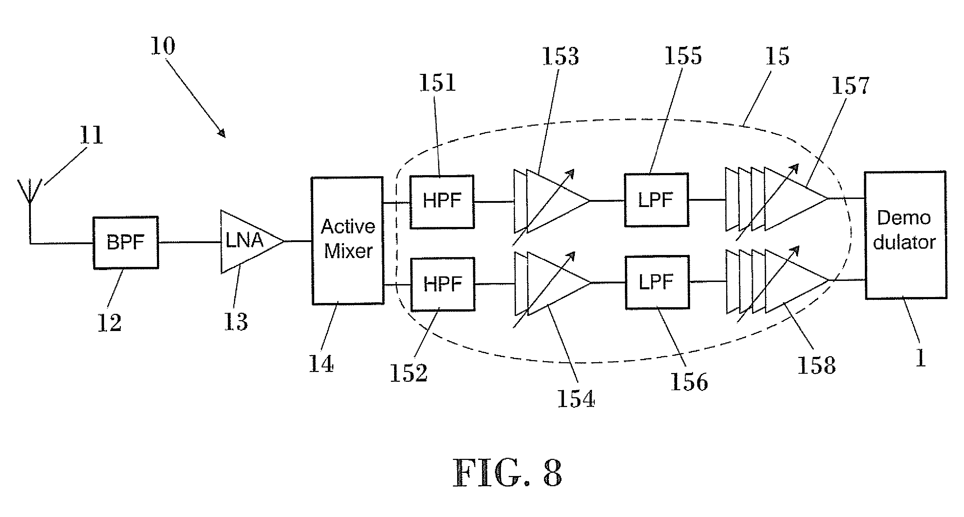

Figure 8 shows a simplified diagram of a wireless receiver 10, including the amplification and filtering stages in the signal path. Block 1 represents the stages of demodulation, decoding and detection of the invention, explained in detail later on. This receiver 10 belongs to a wireless system. It comprises one or more receiving antennas 11, followed by a stage of Zero-IF down conversion 14. The receiver is thus a Zero-IF receiver. Before reaching the mixer for Zero-IF down conversion 14, the received signal passes through a band-pass filter 12 and a low noise amplifier (LNA) 13. The signal delivered to the baseband section 15 of the receiver 10 may typically include adjacent channels, in-band and out-of-band blockers, that can dominate (by up to 40-60dB) the desired signal to be processed. Hence analog baseband blocks are required to exhibit not only a target in-band dynamic range, but excellent linearity for out-of-band signals. This is because nonlinear blocks processing with out-of-band-signals would result in an intermodulation whose product components would fall in the signal band, corrupting the signal quality.

The baseband section 15 of a wireless receiver 10 is formed by a combination of amplification 153 154 157 158 and filtering stages 151 152 155 156. The amplifiers 153 154 157 158 increase signal amplitude. Filters 151 and 152 are high-pass filters used for eliminating the strong dc component which can appear after the active mixer 14 and could therefore saturate the next amplifying stage 153 154. Filters 155 156 reduce the power of the out-of-band blockers in order to increase the swing available for the useful signal.

The receiver 10 of figure 8 comprises two filtering stages. A RC high-pass filter 151 152 removes the slowly-varying DC offset coming from the RF section and part of the Flicker noise, and according to the simulations of the demodulator, it should have a cutoff frequency in the order of 10KHz. The channel filters 155 156 help reducing the level of interferences out of the signal band. Simulations show that a good value for the cutoff frequency is in the order of 550kHz to 650kHz. A $3_{rd}$ order Butterworth filter has been used for the simulations, although other filter approximations can be evaluated, e.g. to decrease ISI. Note that although the limiting amplifier is shown before the demodulator, the linear combinations of the I and Q signals should be generated before amplitude limitation, in order to avoid clipping.

Concerning the gain stages, a preamplification stage 153 154 prior to the channel filter is used to relax its noise requirements, and limiting amplifiers after it 157 158. Due to the wide input dynamic range that the receiver must withstand, a gain control strategy needs to be established. The most important feature of such gain control is that due to the amplitude hardlimiters at the input of the demodulator, the input of the detector can vary in a wide dynamic range and demodulation still operates properly. Hence the gain tuning can be made in a few discrete steps, and what is actually limiting the range where the gain can be constant is the saturation in the previous stages, mainly the maximum output range of the filter, and the dynamic range of the RSSI circuit.

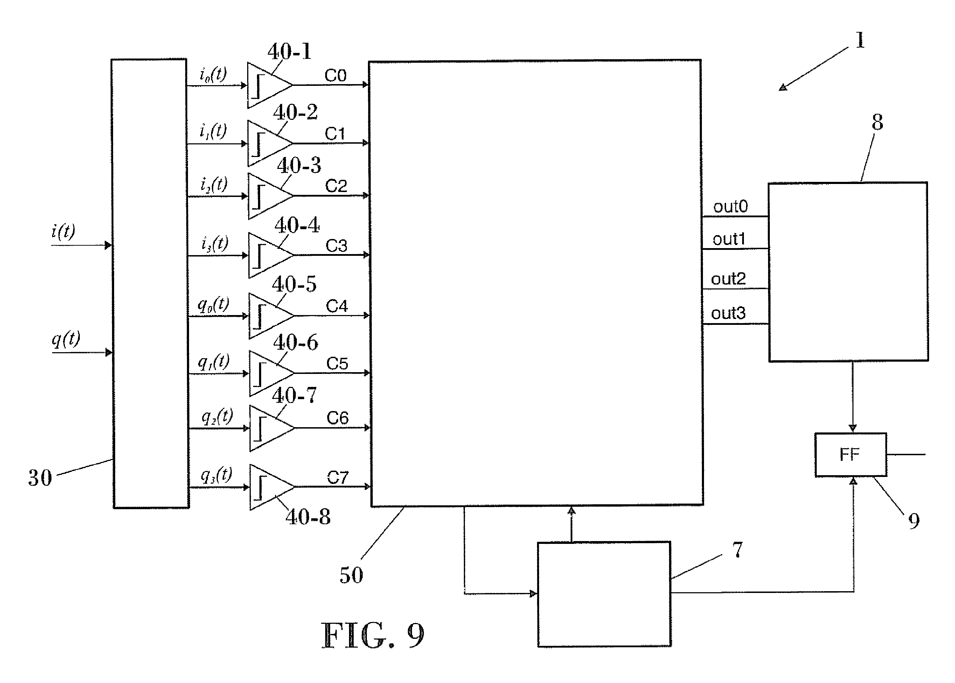

Figure 9 shows a demodulating stage 1 according to the invention. Preferably, this demodulating stage 1 is implemented in the wireless receiver 10 of figure 8. Like the demodulator 1' of figure 6, the demodulating stage 1 comprises a linear combining stage 30 that generates the signals $i_k(t)$ and $q_k(t)$ (k=0, 1, ..., N-1) given by equations (9) and (10). In this particular example, N=4. Since just knowing the sign of such signals is enough to track the phase shifts in the quantized phase plane of figure 5, amplitude hard-limiters 40-1 40-2 40-3 40-4 40-5 40-6 40-7 40-8 are applied (whose output detects the sign of the input). The output of these amplitude hard-limiters 40-1 40-2 40-3 40-4 40-5 40-6 40-7 40-8 is represented in figure 9 as C0 C1 C2 C3 C4 C5 C6 C7.

Like in figure 6, the hard-limited output C0 C1 C2 C3 C4 C5 C6 C7 of the linear combiner 30 can be considered as a thermometric code that encodes the sector in figure 5, where the phase lies at a given instant. To do so, the thermometric code is converted to binary by a stage 50. The 2N outputs C0 C1 C2 C3 C4 C5 C6 C7 of the amplitude limiters 40-1 40-2 40-3 40-4 40-5 40-6 40-7 40-8 are the 2N inputs of the stage 50.

Stage 50 can be implemented in two different ways:

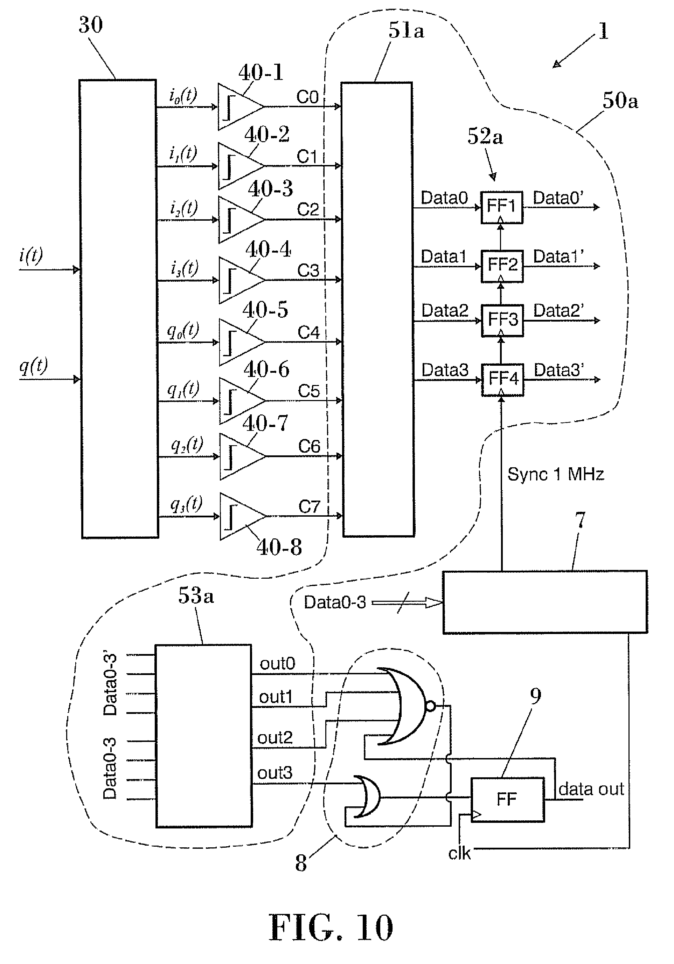

A preferred implementation of stage 50 is represented in figure 10, the stage 50 being referred to as 50a. It comprises a decoder 51a, which has an M-bit output Data0 Data1 Data2 Data3, with $M=\log_2(4N)=4$ in this case, which represents the binary word which corresponds to the thermometric input code. Each of these M output ports outputs one bit. Table 1 shows the correspondence between the sector number (binary) and the polarity of the $i_k(t)$ and $q_k(t)$ signals (thermometric).

Table 1

| Sector | $sgn(q_3(t))$ | $sgn(q_2(t))$ | $sgn(q_1(t))$ | $sgn(q_0(t))$ | $sgn(i_3(t))$ | $sgn(i_2(t))$ | $sgn(i_1(t))$ | $sng(i_0(t))$ |
|---|---|---|---|---|---|---|---|---|
| 0 | 0 | 0 | 0 | 0 | 0 | 0 | 0 | 0 |
| 1 | 0 | 0 | 0 | 0 | 0 | 0 | 0 | 1 |
| 2 | 0 | 0 | 0 | 0 | 0 | 0 | 1 | 1 |
| 3 | 0 | 0 | 0 | 0 | 0 | 1 | 1 | 1 |
| 4 | 0 | 0 | 0 | 0 | 1 | 1 | 1 | 1 |
| 5 | 0 | 0 | 0 | 1 | 1 | 1 | 1 | 1 |

(continued)

| Sector | sgn(q₃(t)) | sgn(q₂(t)) | sgn(q₁(t)) | sgn(q₀(t)) | sgn(i₃(t)) | sgn(i₂(t)) | sgn(i₁(t)) | sng(i₀(t)) |
|---|---|---|---|---|---|---|---|---|
| 6 | 0 | 0 | 1 | 1 | 1 | 1 | 1 | 1 |
| 7 | 0 | 1 | 1 | 1 | 1 | 1 | 1 | 1 |
| 8 | 1 | 1 | 1 | 1 | 1 | 1 | 1 | 1 |
| 9 | 1 | 1 | 1 | 1 | 1 | 1 | 1 | 0 |
| 10 | 1 | 1 | 1 | 1 | 1 | 1 | 0 | 0 |
| 1 | 1 | 1 | 1 | 1 | 1 | 1 | 0 | 0 |
| 12 | 1 | 1 | 1 | 1 | 0 | 0 | 0 | 0 |
| 13 | 1 | 1 | 1 | 0 | 0 | 0 | 0 | 0 |
| 14 | 1 | 1 | 0 | 0 | 0 | 0 | 0 | 0 |
| 15 | 1 | 0 | 0 | 0 | 0 | 0 | 0 | 0 |

If this binary code Data0 Data1 Data2 Data3 is stored in an array 52a of flip-flops FF1 FF2 FF3 FF4, after T seconds, the input Data0 Data1 Data2 Data3 of the flip-flops FF1 FF2 FF3 FF4 represents the sector where the phase lies after the reception of bit $d_k$, whereas the output Data0' Data1' Data2' Data3' of the flip-flops corresponds to the code of the sector where the phase was just before the reception of bit $d_k$. Thus, comparing such codes (Data0 Data1 Data2 Data3; Data0' Data1' Data2' Data3'), the direction of the phase shift produced by bit $d_k$ can be obtained, and hence bit $d_k$ can be decoded. Such comparison is done by means of comparison means 53a, which can be implemented using either an adder or a subtractor.

Preferably, comparison means 53a is implemented by a subtractor. Such subtractor is an M-bit subtractor, whose output is therefore an M-bit word out0 out1 out2 out3. The most significant bit (MSB) of the resulting digital word, outputted at out3 corresponds to $d_k$. If it is "1", it corresponds to a counter-clockwise phase shift, whereas if it is "0", it corresponds to a clockwise phase shift. That most significant bit out3 enters a further flip-flop 9 for being stored and synchronized with respect to the properly clocked remaining flip-flops.

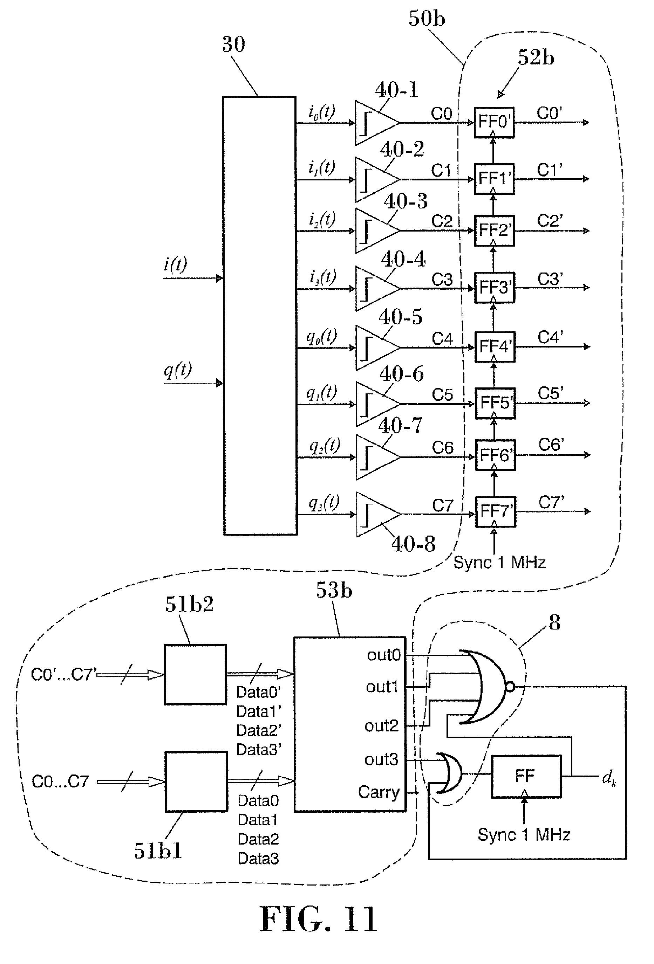

Alternatively, stage 50 can be implemented like in figure 6. This represented in figure 11, wherein the stage 50 is referred to as 50b: The already described output C0 C1 C2 C3 C4 C5 C6 C7 first passes through an array 52b of 2N flip-Flops FF0' FF1' FF2' FF3' FF4' FF5' FF6' FF7'. The code is stored in the array of flip-flops 52b. After a time T, the input of the FFs represents the sector where the phase lies after the reception of bit $d_k$, whereas the output of the FFs codes the sector where the phase was just before the reception of bit $d_k$. Thus, comparing such codes, the direction of the phase shift produced by bit $d_k$ can be obtained, and hence bit $d_k$ can be decoded. To do so, the thermometric code is converted to binary by two decoders 51b1 51b2, and the result enters a comparison means 53b. Preferably, comparison means 53b is a subtractor. The most significant bit MSB of the resulting digital word corresponds to $d_k$. If it is 1, it corresponds to a counter-clockwise phase shift, whereas if it is 0, it corresponds to a clockwise phase shift.

Note that implementation 50a of figure 10 is simpler than that 50b of figure 11, since it saves 2(N-1)-$\log_2$N flip-flops (e.g. half of the flip-flops if N=4) and one thermometer to binary decoder. It is thus suited for low power consumption. In other words, the stage 50b requires a high number of flip-flops. As a consequence, the device size is increased and therefore its cost is also increased.

Furthermore, the flip-flops 52a 52b are preferably clocked from a signal synchronized with the data, in order to sense the phase of the incoming signals at the proper instants. A data synchronization stage 7 is preferably used, as shown in figure 9.

The number N is usually chosen as power of 2, in order to simplify the digital logic. The larger the number N, the more increases the complexity of the demodulator, but a more accurate quantization of the instantaneous phase is achieved. The example of figure 6 shows N=4. Simulations for a Zero-IF receiver have been carried out with Matlab/ Simulink system level and they suggest that a proper choice is N=4. Hence, 2N=8 axes are employed, that divide the IQ plane in 16 sectors. This is illustrated in figure 7.

Coming back to the implementation of figures 9, 10 and 11, the signals at the output of the linear combiner 30 are the following:

$$\theta_k = \pi/(2N)$$

for k=0, 1, ..., N-1

In the particular example wherein N=4, $\theta_k=k\pi/8$ for k=0, 1, 2, 3.

From equation (9):

$$i_0(t) = i(t)$$

$$i_1(t) = i(t)\cdot\cos(\pi/8)+q(t)\cdot\sin(\pi/8) \approx 0.924\cdot i(t)+0.383\cdot q(t)$$

$$i_2(t) = i(t)\cdot\cos(\pi/4) + q(t)\cdot\sin(\pi/4) \approx (1/\sqrt{2})\cdot[i(t) + q(t)]$$

$$i_3(t) = i(t)\cdot\cos(3\pi/8)+q(t)\cdot\sin(3\pi/8)\approx 0.383\cdot i(t)+ 0.924\cdot q(t)$$

and from equation (10):

$$q_0(t) = q(t)$$

$$q_1(t) = q(t)\cdot\cos(\pi/8)-i(t)\cdot\sin(\pi/8) \approx 0.924\cdot q(t)-0.383\cdot i(t)$$

$$q_2(t) = q(t)\cdot\cos(\pi/4)-i(t)\cdot\sin(\pi/4) \approx (1/\sqrt{2})\cdot[q(t) - i(t)]$$

$$q_3(t) = q(t)\cdot\cos(3\pi/8)-i(t)\cdot\sin(3\pi/8)\approx 0.383\cdot q(t)- 0.924\cdot i(t)$$

As already mentioned, Table 1 relates the polarity of each $i_k(t)$ and $q_k(t)$ signal with the sector in figure 7. It is coded as a 1 for a positive value and as a 0 for a negative one. This code is converted to binary form (i.e. to the sector number) according to the correspondence in Table 1.

To illustrate the operation of the demodulating stage 1 of figure 10, imagine that a certain bit shifts the instantaneous phase from sector 6 to sector 9 in figure 7 during time T. It is a positive phase shift (i.e., counter-clockwise) thus corresponding to a bit 1. At the beginning of the bit duration T, $\phi(t)$ is in sector 6, so at the output of the amplitude hard-limiters 40-1 40-2 40-3 40-4 40-5 40-6 40-7 40-8 we have the thermometric code corresponding to such sector, i.e., 0011 1111 from Table 1. This value, once decoded by decoder 51a into a binary value of 4 bits (0110), is stored in the array 52a of flip-flops FF1 FF2 FF3 FF4. After time T, the output of the amplitude hard-limiters 40-1 40-2 40-3 40-4 40-5 40-6 40-7 40-8 corresponds to the coded value of sector 9, i.e., 1111 1110. This value is decoded by decoder 51a into its binary code 9 (1001). Both binary codes are input to the comparison means 53a, which, in the example of figure 10, is a subtractor. Subtractor 53a performs the binary subtraction 6-9=-3 (i.e. 0110-1001-0110+0111-1101). Thus the output of flip-flop 9 stores the most significant bit (MSB) 1, which corresponds to the transmitted bit.

Going back to the data synchronization stage 7 of figures 9 to 11, the clock of the array 52a 52b of flip-flops should be slightly delayed with respect to the clock of the output flip-flop 9 in order to store the MSB of the phase difference just before latching the current phase code. This small delay can be readily implemented by an even number of NOT gates. Since the $T_{bit}$ = 1/Bitrate and the $T_{bit}$ is approximately 1 $\mu$s, the mentioned slight delay can be approximately 1 ns. In other words, in relative terms, the delay between the clock of the array 52a 52b of flip-flops and the clock of the output flip-flop 9 should be of around three orders of magnitude smaller than the $T_{bit}$.

The demodulating stage 1 has been extensively simulated for different SNR values in the range of 4 to 20 dB and including several non-idealities, such as lack of synchronization, frequency offset, I/Q mismatch, errors in the linear combinations of i(t) and q(t), effect of interfering signals and effect of AC coupling on the signal path.

Analyzing the errors of the demodulating stage 1, it has been found out that most of them are produced for data sequences of the type "101" or "010". These data sequences are sequences of bits which form part of the bits flow which modulates the carrier at the transmitter side. These sequences lead to very small phase shifts when the middle bit is being detected, and when corrupted by noise these phase shifts may not be enough for moving the phase out of a sector (figure 7). This is due to the properties of the Gaussian pre-filtering in GFSK modulations: Let's assume that a bit "0" is transmitted at the transmitter side. This bit "0" has therefore to be recovered at the receiver side. If a GFSK modulation is used and the previous and subsequent bits are "1" (that is to say, the transmitted sequence of bits is "101"), the phase variation of the signal which arrives at the receiver side substantially at the time instant wherein said bit "0" should be detected may be small enough not to lead to a change in the sector in the IQ plane where the instantaneous phase lies. As a consequence, the zero-crossing detector might fail. In this particular example, it has been observed that the output of the circuit is fortunately "0". This corresponds to the transmitted "0" in the sequence "101". However, if the transmitted sequence is "010", the zero-crossing detector fails in its attempt to detect said bit "1", providing a "0" at its output. When the implementation of stage 50 is done as shown in figure 10 (stage 50a), the same code (the same digital word) appears at the input (Data0 Data1 Data2 Data3) and output (Data0' Data1' Data2' Data3') of the array 52a of flip-flops FF1 FF2 FF3 FF4, and therefore the output of the subtraction yields "0000". The same problem arises when the implementation of stage 50 is done as shown in figure 11 (stage 50b). Hence, the output bit (the most significant bit (MSB) out3) is decoded as "0". As already said, this is, by chance, the right output for the case "101" but it is not the case for "010".

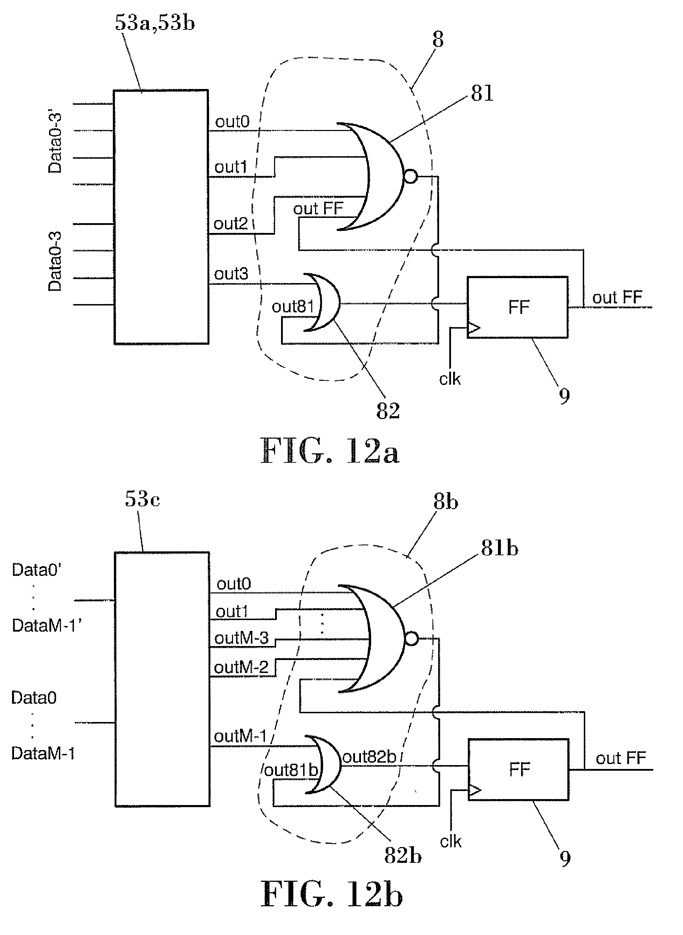

In order to avoid this error, and referring back to the scheme of figure 9, to the detailed preferred implementation of figure 10 and to the alternative implementation of figure 11, the demodulating stage 1 comprises a post-processing stage 8 as detailed in figure 12a.

As shown in figure 12a, post-processing stage 8 has been added to the stage 50 50a 50b of figures 9 to 11. It comprises a NOR gate 81 and an OR gate 82. NOR gate 81 preferably has four inputs, three of which are the three less significant output bits of subtractor 53a 53b. The fourth input outFF of the NOR gate 81 is the output of flip-flop 9. OR gate 82 has two inputs: one of them is the most significant output bit out3 of subtractor 53a 53b and the second one is the output out81 of the NOR gate 81. The output out82 o this OR gate 82 is the input directed to flip-flop 9. Alternatively, NOR gate 81 can have five inputs instead of four, corresponding to all the output bits of subtractor 53a 53b plus the output outFF of flip-flop 9. It is not the preferred implementation of the current invention because "1000" does not belong to the normal operation of the detector hence the most significant bit is not required to detect a near zero phase shift.

When it is detected that the output out0 out1 out2 out3 of the subtractor 53a 53b is "0000" (which cannot happen in normal operation because it would mean that during a certain bit period the phase of the modulated signal had not varied, which is impossible), the complementary ($\overline{bit}$) of the former bit is forced as output bit. This means that it is supposed that a sequence of modulated signal to be detected corresponds to the transmitted sequence "010" or "101" and, at that moment, the middle bit ("1" in the case of "010" and "0" in the case of "101") is tried to be demodulated bearing in mind that the demodulator can make a mistake. Hence, the post-processing stage 8 forces the detection of the complementary bit of the formerly detected one. That is to say, if a sequence "010" arrives, even though the middle "1" is not correctly detected, the post-processing stage 8 forces a "1" corresponding to the middle bit (in other words, it forces a bit which is the complementary one to the first bit ("0") of the sequence "010". The same applies, mutatis mutandis, when a sequence "101" arrives.

Figures 10 and 11 show the post-processing stage 8 of figure 12a inserted between the comparison stage 53a 53b and the flip-flop 9. It only requires 2 logic gates and does not affect normal operation. Simulations including this post-processing stage 8, using Matlab/Simulink system, have been carried out. They show that up to 5-dB less SNR can be used to achieve a 0.1% BER as compared to the detector disclosed in the State of the Art.

Figure 12b shows the post-processing stage 8b for a general demodulator having a sequence of $M=\log_2(4N)$ bits as input to the comparison means 53c (2N axes are employed that divide the IQ plane in 4N sectors). Like in figure 12a, it comprises a NOR gate 81b and an OR gate 82b. NOR gate 81b has preferably M inputs, M-1 of which are the M-1 less significant output bits of comparison means 53c. The M-th input outFF of the NOR gate 81b is the output of flip-flop 9. OR gate 82b has two inputs: one of them is the most significant output bit outM-1 of comparison means 53c and the second one is the output out81b of the NOR gate 81b. The output out82b o this OR gate 82b is the input directed to flip-flop 9. Alternatively, NOR gate 81b can have M+1 inputs instead of M, corresponding to all the output bits of subtractor 53c plus the output outFF of flip-flop 9.

This post-processing stage 8b works in the same way as the already described stage 8. When it is detected that the output out0 out ... outM-1 of the comparison means (preferably a subtractor) 53c "000...0" (which cannot happen in normal operation because it would mean that during a certain bit period the phase of the modulated signal had not varied, which is impossible), the complementary ($\overline{bit}$) of the former bit is forced as output bit.

The circuits of figures 6, 10 and 11 have been simulated using Matlab/Simulink. The simulation has been completely done at baseband to reduce simulation time. A random bit-stream at a data rate of 1 Mbps is applied to a GFSK modulator with h=0.5 and BT=0.5, which generates the complex envelope of such modulated signal, i.e., i(t)+jq(t). This signal can be optionally multiplied by a complex exponential $\exp(j2\pi\cdot\Delta f\cdot t)$ to simulate the effect of a frequency error of value $\Delta f$. Then the signal enters a pre-processing block that contains the base-band section of the Zero-IF receiver, wherein white Gaussian noise is added to the complex signal, and then quadrature components i(t) and q(t) are extracted. Each one is processed by a first-order high-pass filter (HPF) to remove DC offset, then preamplified, filtered by a third-order Butterworth low-pass channel filter (LPF) and finally amplified. The amplitude limitation is included in the demodulator block.

For comparison purposes, 4 different detectors (three of them of the zero-crossing type a fourth, different one) are implemented. First, a zero-crossing demodulator according to figure 6 with N=2 (4 axes) is simulated. Second, the same demodulator but with N=4 (8 axes) has been simulated. Third, a conventional model of a cross-differentiate multiply (CDM) demodulator has been simulated. Finally, a demodulator with N=4 (8-axis) with a post-processing circuit 8 of figures 10 or 11 has been simulated.

The choice of the cutoff frequency of the HPF and the channel filter is critical. The HPF introduces distortion since it removes part of the signal spectrum of the quadrature components of the GFSK modulation. This distortion is reduced using low cutoff frequencies, but then the silicon area required to implement it and the start-up time increase. The channel filter also removes part of the signal spectrum and introduces group delay. A larger cutoff frequency in the channel filter reduces these problems, but then more noise power reaches the demodulator and the rejection of close interferences decreases. Hence the choice of the cutoff frequencies of these filters is critical.

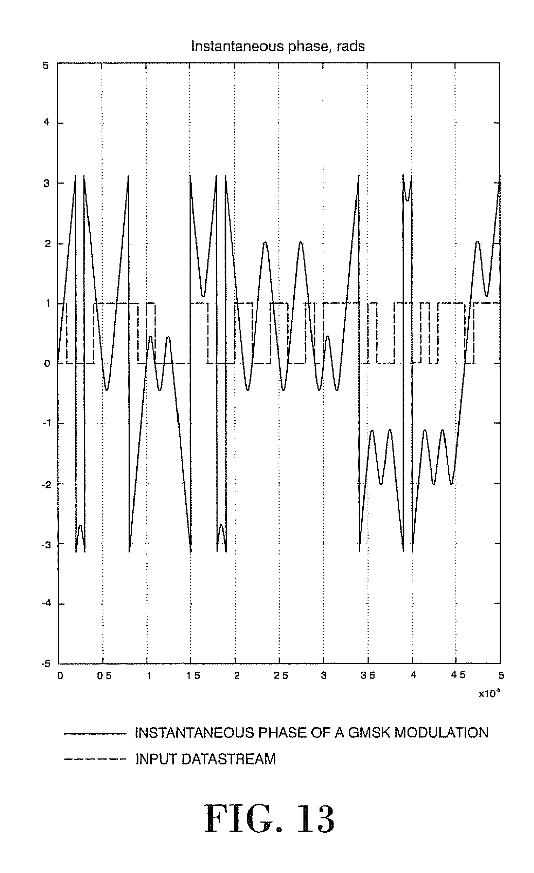

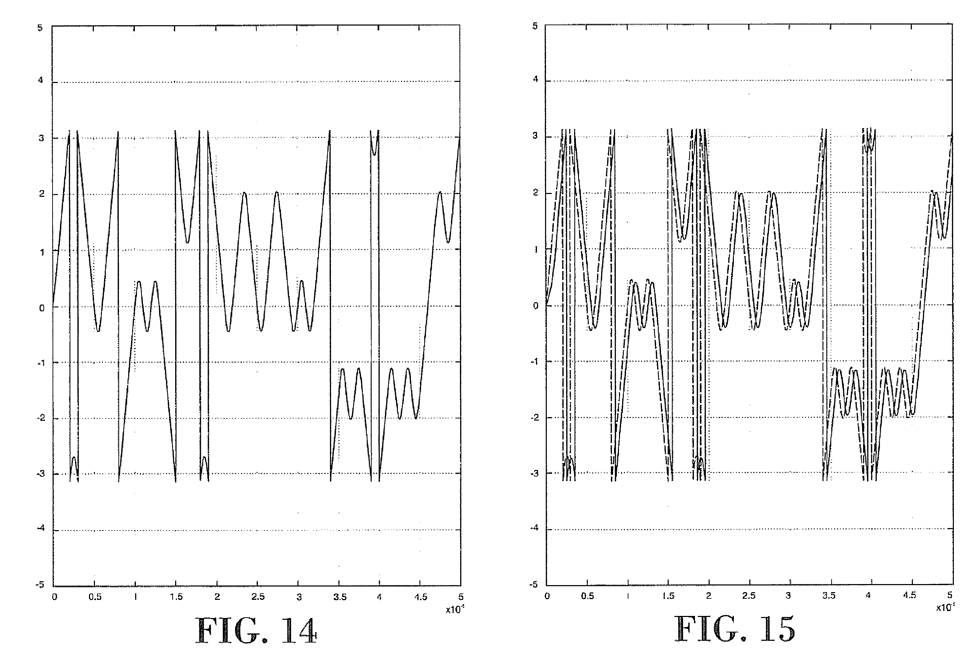

To illustrate these issues, figure 13 shows the input data and the corresponding instantaneous phase $\phi(t)$ =arctan(q(t)/i(t)) of the GMSK modulation. Note that certain combinations of input bits lead to very small phase shifts, as shown in figure 2. For instance, when a single bit 1 or 0 has complementary adjacent bits (i.e., sequence 010 or 101) the next phase shift in the time T of the middle bit is approximately 0. These bits are the most prone to error in the demodulator. These possible errors are mitigated by the post-processing stage 8 of the invention. Figures 14 to 17 show the instantaneous phase (vertical axis) at the input of the receiver and at the output of the channel filter for different filter responses.

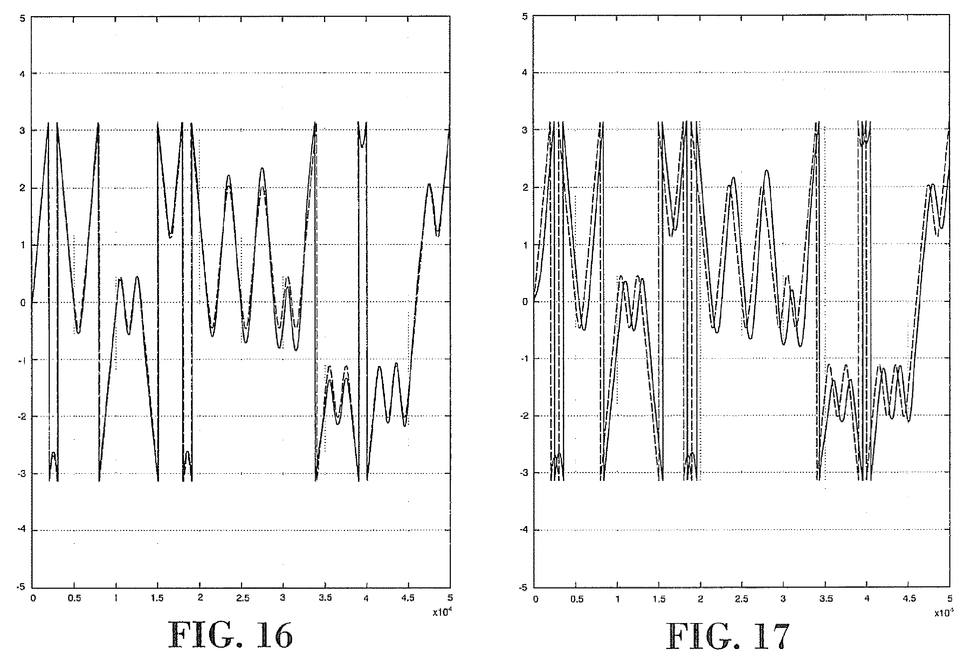

The horizontal axis represents the time, in seconds. Previously, the HPF was removed and the bandwidth of the channel filter was set to 10MHz, in order not to show their distorting effect. The Eb/No was set to a very high value (120dB) in order not to be influenced by noise. As expected, Fig. 14 shows that both phase curves overlap, showing that no distortion appears. The effect of reducing the cutoff frequency of the LPF to 650kHz is shown in figure 15, wherein also the vertical axis represents the phase, in radians and the horizontal one represents the time, in seconds. Although little distortion is introduced, a significant group delay of approximately 500ns appears. Besides, the effect of the HPF is seen in figure 16. In this case, the HPF has a cutoff frequency of 10kHz, and the cutoff frequency of the LPF is again 10MHz. In this case, the phase is not significantly delayed, but it is noticeably distorted. The combined effect of both filters can be seen in figure 17 (Instantaneous phase at the input and output of the baseband preprocessing section, with negligible noise (Eb/No=120dB), HPF with cutoff frequency of 10KHz and LPF of 650kHz. Vertical axis: phase (rads) Horizontal axis: Time (s)), where both distortion and delay are noticeable.

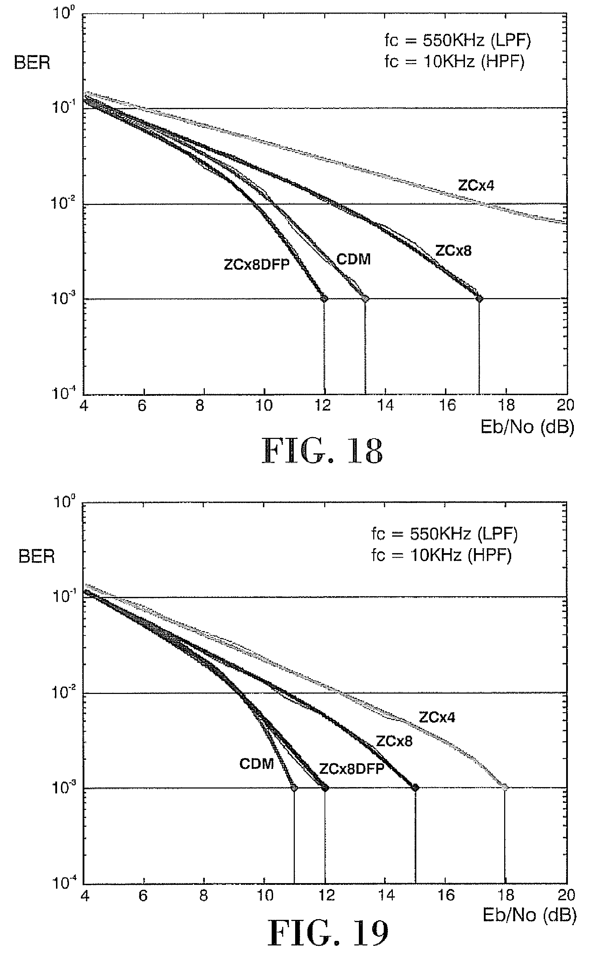

Figure 18 shows the BER versus Eb/No for simulated detectors. The -3dB cutoff frequency of the channel filter is 550 kHz, and that of the HPF is 10KHz. It can be seen that the worst case corresponds to the zero-crossing demodulator of figure 6 with only 4 axes (N=2). The phase quantization that achieves this detector is not enough for this modulation. The version with 8 axes (i.e. N=4) achieves a 0.1% BER, but a high $E_b/No>17$dB. The performance of the ideal model of cross-differentiate multiplier (CDM) detector is better. Finally, the performance of the 8 axes modulator including the post-processing stage 8 of the invention achieves a 0.1% BER for a $E_b/No>12$dB.

However, the results of figure 18 are not optimal, since no data synchronization is provided in the demodulators. Hence the group delay observed in figure 17 precludes the optimal operation of the demodulators. In practice, a data clock recovery circuit is used to generate the output data of the detector, and in that case better results are achieved.

Despite more complex data synchronization models can be implemented in Simulink, a first estimation of the savings caused by a good synchronization has been done by manually setting a delay according to that observed in the received instantaneous phase. The results are shown in figure 19. The duration of the impulse response of the Gaussian filter, which took the default value of 4T in former simulations, is set in this case to 3T, in order to more easily compensate for this delay. Note that in this case the CDM detector is slightly better than the 8 axes demodulator with post-processing stage 8. However, the CDM model contains several completely ideal analog blocks (derivators, multipliers, squarers, etc.). The almost digital 8 axes demodulator with post-processing 8 is much simpler for a similar performance.

As can be appreciated, a better performance of 5 dB is achieved thanks to the post-processing stage 8 8b of the invention.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiments described herein, but also encompasses any variations that may be considered by any person skilled in the art (for example, as regards the choice of components, configuration, etc.), within the general scope of the invention as defined in the appended claims.

**Claims**

1. Demodulator (1) for detecting digital phase or digital frequency modulated signals, wherein said signals comprise an in-phase component (i(t)) and a quadrature component (q(t)), said demodulator comprising:

   - a linear combiner (3) for generating a plurality of 2N linear combinations ($i_k(t)$, $q_k(t)$) of said in-phase component (i(t)) and said quadrature component (q(t)), k being a natural number $0 \leq k < N-1$;
   - a plurality of 2N amplitude limiters (40-1, 40-2, 40-3, 40-4, 40-5, 40-6, 40-7, 40-8), each of them being placed at the output of each of said 2N linear combinations, for providing a digital code (C0, C1, C2, C3, C4, C5, C6, C7) associated to the respective linear combination at the output of which they are placed, wherein said digital code (C0, C1, C2, C3, C4, C5, C6, C7) represents a phase quantization sector of said linear combination;
   - a stage (50, 50a, 50b, 50c) for providing a decoded symbol (Data0 Data1 Data2 Data3; Data0 Data1 DataM-1) having $M=\log_2(4N)$ bits, for comparing (53a, 53b, 53c) said decoded symbol (Data0 Data1 Data2 Data3; Data0 Data1... DataM-1) with a delayed symbol (Data0' Data1' Data2' Data3'; Data0' Data1'... DataM-1') corresponding to said M-bit symbol previously provided and for providing a symbol (out0 out1 out2 out3; out0 out1... outM-1) resulting from said comparison;
   - a flip-flop (9) placed at the output of said stage (50, 50a, 50b, 50c) for selecting a most significant bit (out3; outM-1) of said provided symbol (out0 out1 out2 out3; out0 out1... out-1) resulting from said comparison and for improving synchronization, thus detecting the data signal;

   the demodulator (1) being **characterised in that** it further comprises:

   - a post-processing stage (8, 8b) located between said stage (50, 50a, 50b, 50c) and said flip-flop (9), said post-processing stage (8, 8b) being designed for compensating for errors at the output (outFF) of said flip-flop (9).

2. Demodulator (1) according to claim 1, wherein said post-processing stage (8, 8b) comprises a NOR gate (81, 81b) and an OR gate (82, 82b).

3. Demodulator (1) according to claim 2, wherein said NOR gate (81, 81b) comprises M inputs, M-1 of which correspond to the M-1 less significant output bits (out0 out1 out2; out0 out1... outM-2) of said symbol (out0 out1 out2 out3; out0 out1... out-1) resulting from said comparison, the M-th input of said NOR gate (81, 81b) corresponding to the output (outFF) of said flip-flop (9), and said OR gate (82, 82b) comprises two inputs, one of them being the most significant output bit (out3; outM-1) of said symbol (out0 out1 out2 out3; out0 out1... outM-1) and the second one being the output (out81, out81b) of said NOR gate (81, 81b), and wherein the output (out82, out82b) of said OR gate (82, 82b) is the input of said flip-flop (9).

4. Demodulator (1) according to any preceding claim, wherein said stage (50a) comprises:

   - decoding means (51a) for providing a decoded symbol (Data0 Data1 Data2 Data3; Data0 Data1... DataM-1) having $M=\log_2(4N)$ bits, each of said M bits being outputted in parallel;
   - a bank (52a) of M flip-flops (FF1, FF2, FF3, FF4), each of them being placed at the output of each of the M outputted bits (Data0 Data1 Data2 Data3; Data0 Data1... DataM-1) for delaying (Data0' Data1' Data2' Data3'; Data0' Data1'... DataM-1') said M-bit symbol previously outputted;
   - comparison means (53a) for comparing said M-bit decoded symbol (Data0, Data1, Data2, Data3; Data0 Data1... Data-1) to said delayed M-bit decoded symbol (Data0', Data1', Data2', Data3'; Data0' Data1'... DataM-1').

5. Demodulator (1) according to any claim from 1 to 3, wherein said stage (50b) comprises:

   - a bank (52b) of 2N flip-flops (FF0', FF1', FF2', FF3', FF4', FF5', FF6', FF7'), each of them being placed at the output of each of the 2N outputted bits of said digital code (C0 C1 C2 C3 C4 C5 C6 C7), for delaying (C0' C1' C2' C3' C4' C5' C6' C7') said bits;
   - a first decoding means (51b1) for providing a decoded symbol (Data0 Data1 Data2 Data3) having $M=\log_2(4N)$

bits from said digital code (C0 C1 C2 C3 C4 C5 C6 C7);
- a second decoding means (51b2) for providing a decoded symbol (Data0' Data1' Data2' Data3') having M bits from said delayed digital code (C0' C1' C2' C3' C4' C5' C6' C7');
- comparison means (53b) for comparing said M-bit decoded symbol (Data0, Data1, Data2, Data3) to said delayed M-bit decoded symbol (Data0', Data1', Data2', Data3').

6. Demodulator (1) according to either claim 4 or 5, wherein said comparison means (53a, 53b) is an adder.

7. Demodulator (1) according to either claim 4 or 5, wherein said comparison means (53a, 53b) is a subtractor.

8. Demodulator (1) according to any claim from 3 to 7, wherein said decoding means (51a, 51b1, 51b2) comprises a thermometer-to-binary decoder.

9. Demodulator (1) according to any preceding claim, wherein said frequency-modulated signal is a GFSK signal.

10. Demodulator (1) according to any preceding claim, further comprising a synchronization stage (7).

11. Zero-IF receiver (10) comprising a demodulator (1) according to any preceding claim.

12. Zero-IF receiver according to claim 11, further comprising a zero-IF down conversion stage (14) configured for converting a received signal into said in-phase component (i(t)) and said quadrature component (q(t)).

13. Zero-IF receiver according to either claim 11 or 12, said receiver being a wireless receiver.

**FIG. 1**

FIG. 2

FIG. 3

FIG. 4

FIG. 5

**FIG. 6**
(PRIOR ART)

FIG. 7

FIG. 8

FIG. 9

**FIG. 10**

**FIG. 11**

**FIG. 12a**

**FIG. 12b**

Instantaneous phase, rads

INSTANTANEOUS PHASE OF A GMSK MODULATION

INPUT DATASTREAM

FIG. 13

FIG. 15

FIG. 14

FIG. 17

FIG. 16

FIG. 18

FIG. 19

| Europäisches Patentamt European Patent Office Office européen des brevets | **EUROPEAN SEARCH REPORT** | Application Number EP 08 10 2480 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | SAMADIAN S ET AL: "DEMODULATORS FOR A ZERO-IF BLUETOOTH RECEIVER" IEEE JOURNAL OF SOLID-STATE CIRCUITS, vol. 38, no. 8, 1 August 2003 (2003-08-01), pages 1393-1396, XP001170979 IEEE SERVICE CENTER, PISCATAWAY, NJ, US ISSN: 0018-9200 * abstract; figures 2,5 * sections II-IV ----- | 1,2,4-13 | INV. H04L27/156 H04L27/22 H03D3/00 H03M7/16 |
| X | CHRISTIAN C ENZ ET AL: "Ultra low-power MEMS-based radio for wireless sensor networks" EUROPEAN CONFERENCE ON CIRCUIT THEORY AND DESIGN, 27 August 2007 (2007-08-27), pages 320-331, XP031257750 IEEE, PISCATAWAY, NJ, USA ISBN: 978-1-4244-1341-6 * figures 21,22,24 * sections V, V.B ----- | 1,2,4-13 | |
| A | WO 2007/088175 A (IMEC INTER UNI MICRO ELECTR [BE]; UNI DI PISA [IT]; VAN DER PLAS GEERT) 9 August 2007 (2007-08-09) * figure 1A * * paragraph [0023] * * paragraph [0033] * ----- | 1-13 | TECHNICAL FIELDS SEARCHED (IPC) H04L H03D H04B H03K H03M |

The present search report has been drawn up for all claims

| Place of search | Date of completion of the search | Examiner |
|---|---|---|
| The Hague | 28 October 2008 | Faber, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 10 2480

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2008

| Patent document cited in search report | Publication date | Patent family member(s) | Publication date |
|---|---|---|---|
| WO 2007088175 A | 09-08-2007 | NONE | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5469112 A

**Non-patent literature cited in the description**

- **Sohrab Samadian et al.** Demodulators for a Zero-IF Bluetooth Receiver. *IEEE Journal of Solid-State Circuits,* August 2003, vol. 38 (8